# EUROPEAN PATENT SPECIFICATION

(11) **EP 3 007 550 B1**
(45) Date of publication and mention of the grant of the patent: **05.04.2017**
(21) Application number: 14738617.1
(22) Date of filing: 11.06.2014
(51) Int. Cl.: A01K 11/00

(54) **IDENTIFICATION KIT FOR THE IDENTIFICATION OF A LIVING BEING**
KIT ZUR IDENTIFIZIERUNG EINES LEBEWESENS
KIT D'IDENTIFICATION POUR L'IDENTIFICATION D'UN ÊTRE VIVANT

(30) Priority: 11.06.2013 BE 201300408
(43) Date of publication of application: 20.04.2016
(73) Proprietor: Metagam BVBA, 2530 Boechout (BE)
(72) Inventor: GUYOT, Luc, B-2530 Boechout (BE)
(74) Representative: Van hunsel, Lieven M.S.
(86) International application number: PCT/IB2014/062130
(87) International publication number: WO 2014/199312

(56) References cited:
- EP-A1- 1 060 662
- WO-A1-2004/010773
- WO-A1-2013/060690
- FR-A1- 2 917 574

## Description

Identification kit for identifying a living being.

The present invention concerns an identification kit for identifying a living being, see e.g. document EP-A-1060662.

More specifically, the invention concerns an identification kit for identifying a living being such as an animal or a plant.

Such an identification kit is hereby at least provided with a mark which can be pierced through organic tissue of the creature and thus can be attached to said creature so as to mark it.

The mark has a male tag part and a female tag part, with a male elongated projection and a complementary female duct respectively.

The male and female tag part can thus be inextricably connected in the creature's tissue by piercing the tissue with the male elongated projection and by inserting the male elongated projection in the female duct.

Typically, such a mark may consist of an ear tag that can be pierced in the ear of an animal to be marked, for example a cow or a pig, but marks in other forms are not excluded however.

An identification kit to which the invention relates is also provided with a biopsy kit, containing a capsule and a stopper, and with which a piece of biopsy tissue from the creature can be inserted in the capsule while applying the mark.

According to the present state of the art, such identification kits are already known, but they have several disadvantages.

Thus, identification kits are known whereby the capsule for the biopsy is initially provided on the side of the male tag part, after which this capsule, by applying the mark with suitable pliers, is provided with a piece of biopsy tissue, is separated from the male tag part and remains on the pliers.

A disadvantage of these known identification kits is that the biopsy tissue, while the mark is being applied, is not immediately hermetically sealed, thus requiring some additional actions to that end.

In other known identification kits this problem is solved in that biopsy tissue from the creature is pushed in the capsule by putting the male and female tag part together; in that the stopper is fit in the capsule and the sealed biopsy kit is thrust away from the mark.

From DE 200 22 647 is known such an identification kit for example, whereby the capsule for the biopsy tissue is initially suspended in a passage in the female tag part and whereby, by joining the male and the female tag part and by snapping them together, the capsule is thrust out of the passage.

A disadvantage of such a known identification kit, however, is that the fastening between the male and the female tag part is not protected against fraud or sabotage, also referred to as the fastening being not "tamper proof".

A first reason is that the male tag part is made hollow, so that after the parts of the mark have been connected there remains a central passage through the mark, allowing for the elastic deformation of the mark without necessarily leaving traces of visible damage.

Another reason is that, after the male and female tag part have been snapped together, the male tag part does indeed engage behind edges on the female tag part, but the female and the male tag part are not closely linked however, so that all sorts of tools can be easily inserted between both parts for temporarily deforming and opening the mark.

Another disadvantage of this known type of identification kits is that the male, longitudinal tag part is made wide with a large, widened head, requiring a relatively large hole to be made in the creature's tissue and/or requiring much flexibility of the tissue for the passage of the widened head when fixing the mark.

From FR 2.831.389 is known another identification kit, in which case the capsule is initially solidly connected to the female tag part by means of a shear edge and whereby the capsule is broken off this female tag part while the mark is being snapped in place.

Such a known identification kit also has the aforesaid disadvantages, more specifically in that the fastening of the male and female tag part is not secured against sabotage and in that the male protrusion is wide.

Moreover, use is made of many small components, such as a component for transmitting a force, whereby these small components need to be assembled while the mark is being provided and whereby, after the mark has been fixed, the aforementioned component for transmitting a force remains loose, making such an identification kit impractical to use.

Also, the present invention aims to remedy one or several of the aforesaid and possibly other disadvantages.

A particular aim of the invention is to achieve an identification kit with a mark that cannot be opened after application without noticeable damage to the mark so as to protect it against tampering and fraud.

A further aim of the invention is to obtain an identification kit whereby the manipulations for applying a mark and taking a biopsy are restricted to a minimum.

Another aim of the invention is to make sure to cause as little discomfort or injury as possible to the creature concerned when applying the mark.

To this end, the present invention concerns an identification kit for identifying a living being, such as an animal or a plant, according to claim 1.

A major advantage of such an identification kit according to the invention is that it is provided with a mark, whereby after its attachment to a creature, the female and the male tag part fit closely together, making tampering with or re-opening the mark without any noticeable damage to the mark impossible, such that fraud by the successive application of one and the same mark on several creatures is excluded.

In the identification kit in accordance with the invention, the capsule is formed of a separate part which can be inserted in the female duct and whereby, by joining the male tag part and the female tag part, the capsule can be pushed through the perforation.

The identification kit according to the invention is very practical and safe to use. Initially, before the mark is put in place, the capsule is entirely situated in the female tag part, so that the whole is compact and the capsule is well protected.

While the mark is being applied, biopsy tissue is taken with the male tag part and pushed in the capsule; a stopper is placed on the capsule and, finally, the capsule is pushed through the perforation connecting to the female tag part, whereby the head of the male tag part entirely seals the perforation.

According to another preferred embodiment of an identification kit in accordance with the invention, the female tag part is provided with one or several locking springs that protrude over a limited length from the wall of the female duct so as to hold the male and the female tag part inextricably together after they have been joined.

With such an embodiment of an identification kit according to the invention, no bulges or ridges or the like need to be provided on the male tag part which can engage in complementary forms of the female tag part in order to lock the male tag part in the female tag part, as is the case with the known identification kits described in the introduction.

This is advantageous in that the male elongated projection can be made slender, with a smooth shape and a virtually constant cross section, making piercing the tissue of the creature to be marked much easier, so that damage or injury to this tissue is restricted to a minimum.

In order to better explain the characteristics of the invention, the following preferred embodiments of an identification kit for identifying a living being in accordance with the invention are described by way of example only without being limitative in any way, with reference to the accompanying figures, in which:
figure 1 shows a sketch of a cow's head, whereby a mark which is part of an identification kit according to the invention is provided in both ears;
figure 2 shows a first embodiment of an identification kit according to the invention, seen in perspective, as well as some organic tissue of a living creature, in the initial position, i.e. before the mark is applied and a biopsy is taken;
figure 3 shows a vertical section through the identification kit from figure 2 according to a plane indicated by line III-III;
figure 4 is an enlarged perspective view of the locking spring, indicated by F4 in figure 3;
figure 5 is a cross-section through the locking spring from figure 4 to an even larger scale according to a section in accordance with line V-V; figure 6 shows the pin indicated by F6 in figure 3 to a larger scale;
figures 7 and 8, as well as figures 9 and 10, are representations of the first embodiment of an identification kit according to the invention, analogous to those of figures 2 and 3, for an intermediate position and in the final position respectively when applying the mark and taking a biopsy;
figures 11 and 12, as well as figures 13 and 14, represent the different parts of an identification kit according to the invention in accordance with a second embodiment for the initial position, i.e. analogous to figures 2 and 3, and the final position, i.e. analogous to figures 9 and 10 respectively;
figures 15 and 16 illustrate a third embodiment of an identification kit according to the invention in the final position;
figure 17 is a magnified view of the capsule indicated by F17 in figure 16;
figures 18 and 19 are cross-sections of the same capsule from figure 17, but in other positions while in use; and,
figure 20 is a cross-section which illustrates that an identification kit according to the invention is preferably initially provided with a sticker protecting the capsule.

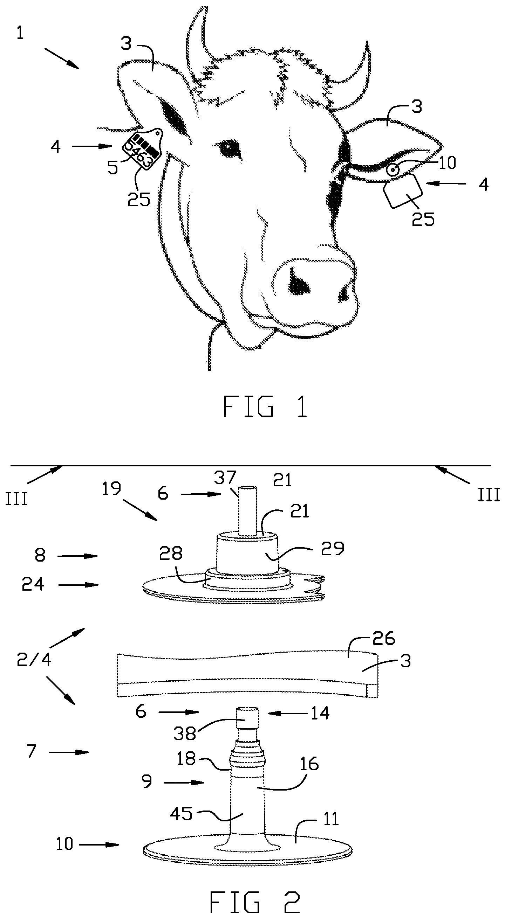

Figure 1 shows a living creature 1, more specifically a cow 1, which creature 1 was identified by means of an identification kit 2 according to the invention, whereby in each ear 3 of the cow 1 a mark 4, more specifically in this case an ear tag 4, was applied and whereby a biopsy of the tissue of the ear 3 was simultaneously taken, which will be explained in more detail hereafter.

It is the intention that the biopsy tissue and the ear tags 4 form a whole and to this end are preferably provided with the same identification number 5, whereby DNA analysis of the biopsy tissue makes it always possible to verify whether the ear tags 4 actually identify the cow 1 with that particular DNA.

An identification kit 2 according to the invention is designed to identify living creatures 1 in general and not necessarily only animals such as cows, sheep, pigs, horses, etc., but just as well plants.

Figures 2 to 10 show a first embodiment of such an identification kit 2 according to the invention in more detail.

The identification kit 2 is composed of several elements, whereby more specifically a number of elements perform the function of a mark 4 which is to be permanently attached to the creature 1, and a number of other elements form a biopsy kit 6 in which biopsy tissue is collected and which is designed to be sent to a lab after the creature 1 has been marked.

The mark 4 comprises a male tag part 7 and a female tag part 8.

The male tag part 7 has a male, longitudinal and shaft-like protrusion 9 which is designed as a pivot 9 with a round flange 11 at the base 10.

In the given embodiment, the protrusion 9 is made hollow with a cavity 12 extending up to the base 10 of the protrusion 9 so as to form a central opening 13 in the flange 11, but other embodiments whereby the protrusion 9 is not hollow are not excluded either according to the invention.

The far end at the head 14 of the protrusion 9 is made such that it is closed.

Both the inside 15 of the protrusion 9 in the cavity 12 and the outside 16 of the protrusion 9 have a stepped form with a progressively decreasing diameter towards the head 14 of the protrusion 9.

The cavity 12 is designed to insert a portion of the pliers in that are used for branding the cow 1 with a mark 4.

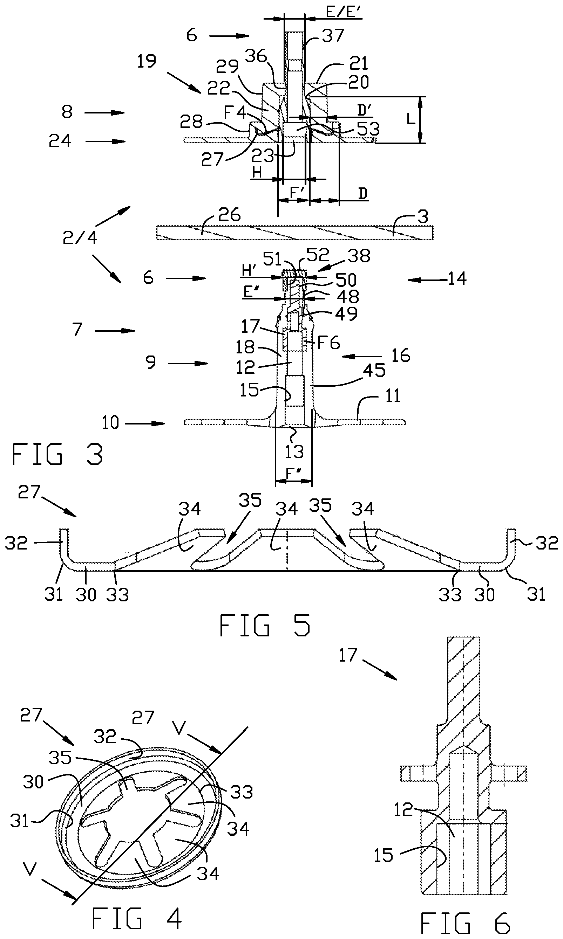

On the head 14 of the protrusion 9 is further incorporated a pin 17 in the protrusion 9, which is represented in more detail in figure 6.

This pin 17 is made of a more rigid material, such as for example a light metal or a composite material or the like, whereas the remaining part 18 of the male tag part 7 is preferably made of a more elastic plastic.

In the first embodiment, the pin 17 on the outside 16 of the male tag part 7 is completely covered by the plastic part 18, but that does not necessarily have to be the case according to the invention.

The pin 17 is also made partly hollow, whereby the inside 15 of the pin 17 is aligned with the inside of the remaining part 18, so that both parts together form the stepped cavity 12 and so that the part of the marking pliers to be inserted can rest on the pin 17 during the marking.

The female tag part 8 includes a bush 19 forming a duct 20, whereby the bush 19 has a bottom 21 and a duct wall 22 extending as of the bottom 21 up to an open duct end 23.

At the open duct end 23, the female tag part 8 is surrounded by a flat flange 24, which is partly circular but mostly formed of a flat label 25, only represented in figure 1, on which the identification number 5 is provided.

Preferably and as is also the case in this first embodiment as discussed here, the duct wall 22 is made as a cylindrical wall part 22 with a constant inner diameter F' over a substantial part of its length L which extends as of the open duct end 23, save for some minor deviations promoting its production process.

Indeed, in reality, there can be made some subtle differences in diameter, in particular for mould-technical reasons.

For example, a reduced conicity can be arranged to promote the release from the production mould, or small edges can be provided to temporarily hook the mark 4 in the mould before it is ejected from the latter.

The duct 20 in the female tag part 8 is complementary to the longitudinal protrusion 9 of the male tag part 7, making it possible to inextricably connect the male tag part 7 and the female tag part 8 with one another in the tissue 26, in this case the tissue 26 of the ear 3 of the cow 1, by piercing it and by inserting the male elongated projection 7 in the female duct 8.

Moreover, the female tag part 8 is provided with a locking spring 27 to this end, represented in more detail in figures 4 and 5, which is embedded in the duct wall 22 for the most part, but which also partly protrudes over a restricted length from the duct wall 22 of the female duct 20 so as to hold the male tag part 7 and the female tag part 8 inextricably together after they have been joined.

At the locking spring 27 near the flange 24, the duct wall 22 of the bush 19 has a thickened portion 28 with a thickened wall thickness D, at least compared to the wall thickness D' of the portion 29 near the bottom 21, so that sufficient material is provided in the thickened portion 28 for embedding the locking spring 27.

In the given example of figures 4 and 5, the above-mentioned locking spring 27 is formed of a ring-shaped element 27 which is delimited by a circular strip 30, which is provided with an upright edge 32 on its radially most outward directed side edge 31 and whereby in this case six spring blades 33 extend slightly inwardly inclined as of the radially most inward directed side edge 34 of the circular strip 30, towards the centre of the locking spring 27.

The spring blades 33 are more or less triangular in shape and there is a certain space 35 provided between successive spring blades 33.

The far ends of the spring blades 33 extend into the duct 20, while the upright edge 32 ensures a good anchoring of the locking spring 27 in the female tag part 8.

Centrally in the bottom 21 of the bush 19 of the female mark 8 is further provided a perforation 36, which opens into the female duct 20 and which stretches in the extension of this duct 20.

The identification kit 2 is also provided with a biopsy kit 6 for taking a biopsy, which contains a capsule 37 as well as a stopper 38.

The capsule 37 is hereby formed of a separate part which can be inserted in the female duct 20 of the female tag part 8, as is illustrated in figures 2 and 3.

In this initial position, the capsule 37 stretches from the duct 20 through the perforation 36, such that it partly protrudes from the bush 19.

In the given example, the capsule 37 is made as a sleeve with a sleeve wall 39 extending between a sealed capsule tip 40 and a capsule tip 41 which can be sealed with the stopper 38.

In the initial position, the sealed capsule tip 40 extends outside the bush 19, whereas the sealable capsule tip 41 is situated in the duct 20 and is directed towards the open duct end 23.

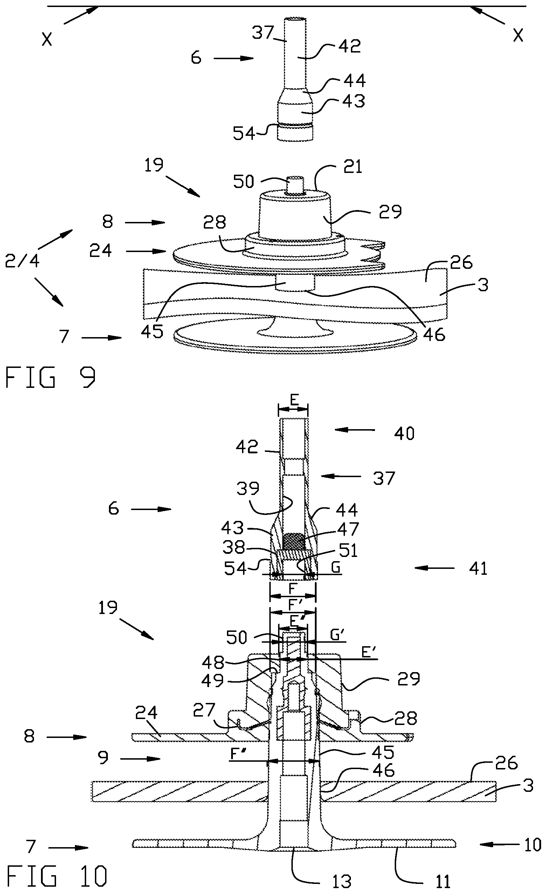

The sleeve wall 39 has a narrowed wall part 42 near the sealed capsule tip 40 and a more widened wall part 43 near the sealable capsule tip 41, as is clearly shown for example in figure 10.

These wall parts 42 and 43 are connected by means of an intermediary wall part 44, which may have for example a conical shape, but also a stepped shape or any other shape whatsoever.

The narrowed wall part 42 has an outer diameter E corresponding to the inner diameter E' of the perforation 36 in the female tag part 8, and the widened wall part 43 has an outer diameter F corresponding to the inner diameter F' of the duct 20 in the female tag part 8.

Thus, when the capsule 37 is inserted in the female tag part 8, it is nicely aligned with the duct 20 and the perforation 36.

The aim is that, by joining the male tag part 7 and the female tag part 8, the capsule 37 can be pushed through the perforation 36, whereby the perforation 36 is temporarily deformed.

The intermediate wall part 44 of the capsule 37 hereby assists the conduction through the perforation 36, whereas the capsule 37, during the whole movement through the perforation 36, is held stable in the duct 20 by the cylindrical shape of the duct wall 22 of the duct 20 and the corresponding widened wall part 43 of the capsule 37 itself.

The capsule 37 is further provided on its sealable capsule tip 41 with a sharp edge which serves as a knife when taking a biopsy.

In order to be able to firmly fix the male tag part 7 in the duct 20 of the female tag part 8, the protrusion 9 of the male tag part 7 is made as a cylindrical pivot 45 with a substantially constant outer diameter F" corresponding to the substantially constant inner diameter F' of the cylindrical part 22 of the female duct 20, such that a slender pivot 45 is obtained.

Small variations in the diameters F" and F' as a function of the length can be accorded so as to simplify the production of the elements concerned.

Thanks to the thus obtained complementary shapes, created by applying identical dimensions, i.e. the perforation 36 as of the bottom 21 up to the edge formed with the female duct 20 in the female part, combined with the edge of the buffer wall 49 and the cylindrical head portion 48, the stripping of biopsy tissue 47 from the tissue 26 is additionally improved.

Indeed, as soon as the cylindrical head portion 48 finds a connecting entrance in the perforation 36, the stripping of tissue 26 and hair is greatly improved.

By making use of a system with locking springs 27 in order to lock the male tag part 7 in the female tag part 8, said pivot 45 can be made smooth and with a minimal diameter F", such that piercing the tissue 26 can be done very efficiently, and the hole 46 that is made while taking biopsy tissue 47 will have a minimum dimension, which is of course very advantageous for the animal 1 or plant to be marked.

A major characteristic of an identification kit 2 according to the invention is that the head 14 of the male longitudinal protrusion 9 has a shape which is complementary to the perforation 36 in the female tag part 8, such that after joining and connecting the male tag part 7 and the female tag part 8, the perforation 36 will be completely filled and sealed tightly by the head 14 of the longitudinal protrusion 9, which situation is illustrated for example in figures 9 and 10.

In this way, it is made impossible to re-open the mark 4 without damaging the mark 4, such that the possibility of fraud is excluded with identification kits 2 according to the invention.

To this end, the head 14 of the protrusion 9 is provided with a cylindrical head portion 48 at some distance from the far end of the head 14, which cylindrical head portion 48 has an outer diameter E" corresponding to the inner diameter E' of the perforation 36 in the female tag part 8.

The head 14 of the male protrusion 9, on the edge of said cylindrical head portion 48 which is the most distant from the far end of the head 14, is further surrounded by a bumper 49 with which the male protrusion 9 can rest on the bottom 21 of the female duct 20 when the male tag part 7 has been provided in the female tag part 8, as is represented for example in figure 10.

Thus, the perforation 36 can be tightly sealed by the cylindrical head portion 48 of the head 14 of the longitudinal protrusion 9, whereby an additional seal of the perforation 36 is obtained by putting the bumper 49 against the bottom 21.

In the given first embodiment, the head 14 of the male protrusion 9 is also provided with a cylindrical head end 50 on which the stopper 38 of the biopsy kit 6 can be placed.

The stopper 38 is hereby provided with a cylindrical stop wall 51 and a stop bottom 52, whereby the cylindrical stop wall 51 has an inner diameter G corresponding to the outer diameter G' of the cylindrical far end 50 provided on the head 14 of the male protrusion 7 so that initially, when the marking starts, the stopper 38 can be placed on the head 14, as is represented in figures 2 and 3.

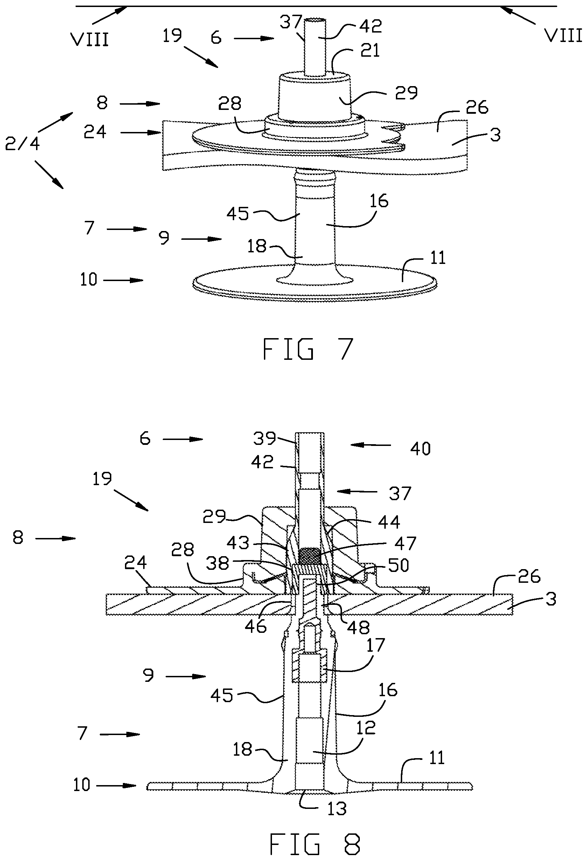

Further, the cylindrical stop wall 51 has an outer diameter H' corresponding to the inner diameter H of an inner cylindrical hole 53 in the capsule 37 at the sealable capsule tip 41, so that the capsule 37 can be sealed with the stopper 35 by inserting the stopper 38 in the cylindrical hole 53 while marking, as is the case in figures 7 to 10.

In short, the male longitudinal protrusion 9 includes a plastic part 18, which is partly constructed as a pivot 45, and in which a pin 17 is incorporated which is made of a more rigid material, and whereby on the pin 17 is provided a plastic head 14 which is complementary to the perforation 36 in the female tag part 8, because of the cylindrical head portion 48, as well as to the stopper 38 of the biopsy kit 6, because of the cylindrical head end 50.

In the embodiment shown in figures 2 to 10, the head 14 is connected to the pin 17 or, in other words, the pin 17 is fully embedded in the plastic portion 18, of which the head 14 forms a part.

Another detail to note, preferably provided according to the invention, relates to the fact that the capsule 37 is formed of a separate part which initially is not part of the mark 4.

In order to be able to initially maintain this separate capsule 37 in the duct 20 of the female tag part 8, i.e. before taking a biopsy, this capsule 37 is preferably provided with at least one groove 54 which can co-operate with the locking spring 27, or with the locking springs 27 if several locking springs 27 were applied, protruding from the duct wall 22 of the female duct 20 over a length corresponding to the depth of the groove 54.

In practice, the locking springs 27 preferably protrude from the duct wall 22 over only a restricted length, for example over a length of 0.02 mm to 0.05 mm.

Thus, the locking spring 27 or the locking springs 27 has/have a double function, i.e. maintaining the capsule 37 in the female tag part 8 in the initial position, as is represented in figures 2 and 3, as well as keeping the male tag part 7 and the female tag part 8 together in the final position after the mark 4 has been applied on the creature 1, as is the case in figures 9 and 10.

The use of an identification kit 2 according to the invention is simple and as follows.

In the initial position, before the creature 1 is actually marked, some tissue 26 is put between the male tag part 7 and the female tag part 8.

The stopper 38 of the biopsy kit 6 is placed on the head 14 of the male protrusion 9, while the capsule 37 is anchored in the duct 20 of the female mark part 7 by means of the locking spring 27.

This initial situation is represented in figures 2 and 3.

By means of pliers, not represented in the figures, the male tag part 7 and the female tag part 8 are seized, more specifically in the cavity 12 provided in the protrusion 7 and round the bush 19 respectively, and these parts 7 and 8 are moved towards one another, such that the tissue 26 is caught between the stopper 38 and the knife-shaped capsule tip 41 and, in a further movement, biopsy tissue 47 is cut from said tissue, which biopsy tissue is pushed into the capsule 37.

Simultaneously, the stopper 38 is put in a fitting manner in the cylindrical opening 53 of the capsule 37, such that the biopsy kit 6 is sealed.

This situation is represented in figures 7 and 8.

When the male tag part 7 and the female tag part 8 are brought even further together, the capsule 37 is pushed entirely through the perforation 36, and the male tag part 7 is inextricably fixed in the female mark 8 by means of the locking spring 27, whereby thanks to the complementary shape of the cylindrical head portion 48, the perforation 36 is entirely sealed.

Thus is obtained the final position as represented in figures 9 and 10, whereby the sealed capsule 37 is removed, separated or rejected from the mark 4, whereby the capsule 37 is ready to be sent to a lab and whereby the mark 4 is fixed to the creature 1.

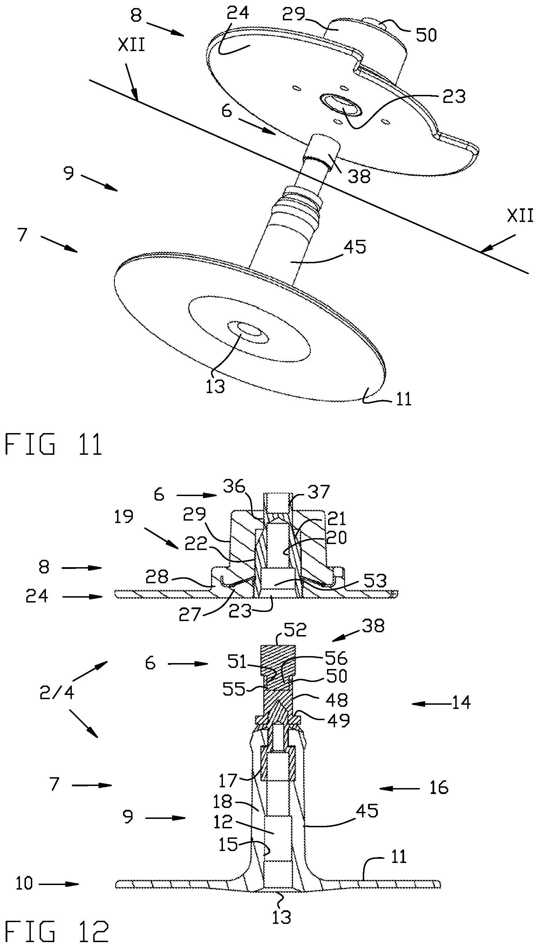

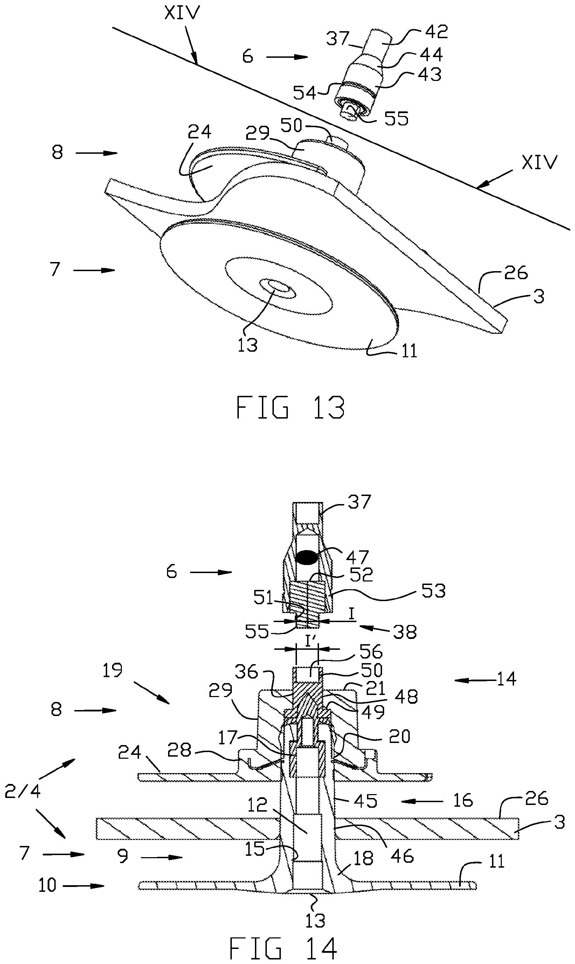

Figures 11 to 14 represent a second embodiment of an identification kit 2 according to the invention, whereby the stopper 38 of the biopsy kit 6, as well as the head 14 of the male protrusion 9 are designed somewhat differently.

More specifically, the stopper 38 has a cylindrical protrusion 55 in this case with a cylindrical stop wall 51 and an outer diameter I corresponding to the inner diameter I' of a cylindrical hole 56 in the head end 50 of the head 14 of the male protrusion 9, of course once more with the intention to be able to put the stopper 38 on the head 14.

Further, the head 14 of the longitudinal protrusion 9 is designed as a separate part 14, preferably made of a plastic with a possibly distinctive colour, which can be placed as separate on the pin 17.

Apart from the fact that the head 14 needs to be placed as separate on the protrusion 9, this does not substantially alter the operation of the identification kit 2.

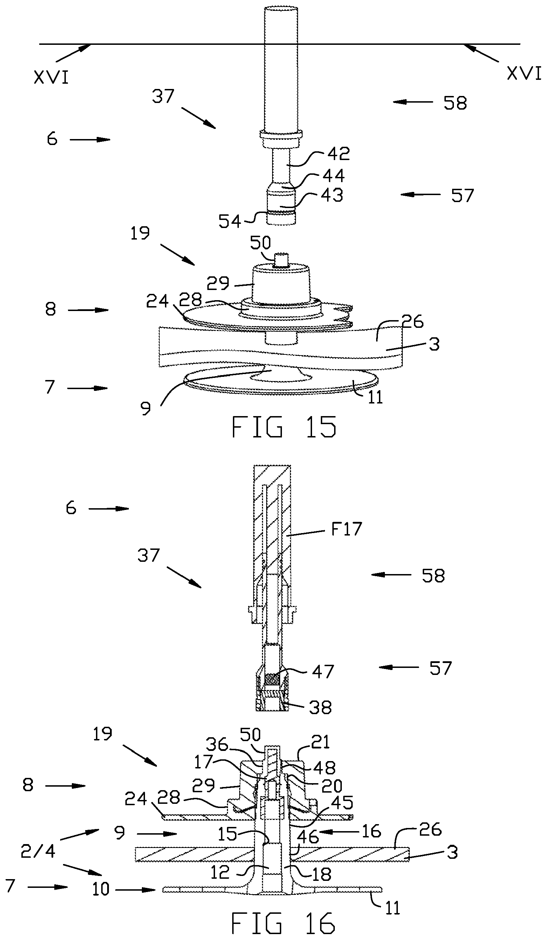

Figures 15 to 19 represent another embodiment of an identification kit 2 according to the invention, similar to the first embodiment, but whereby the capsule 37 is carried out in two parts, with a first capsule section 57 and a second capsule section 58 which can move in relation to one another by means of screw thread or a clamp fit, so that the stopper 38 can be removed from the capsule 37 in a simple manner.

The first capsule section 57 is similar to the capsules 37 in the previous embodiments in that it is this capsule section 57 in which the stopper 38 can be put, while it also has the required outward shapes to work in conjunction with the duct wall 22 as well as the perforation 36 in the female tag part 8, and whereby it also includes a knife-shaped sealable capsule tip 41 making it easy to take biopsy tissue 47 from the tissue 26.

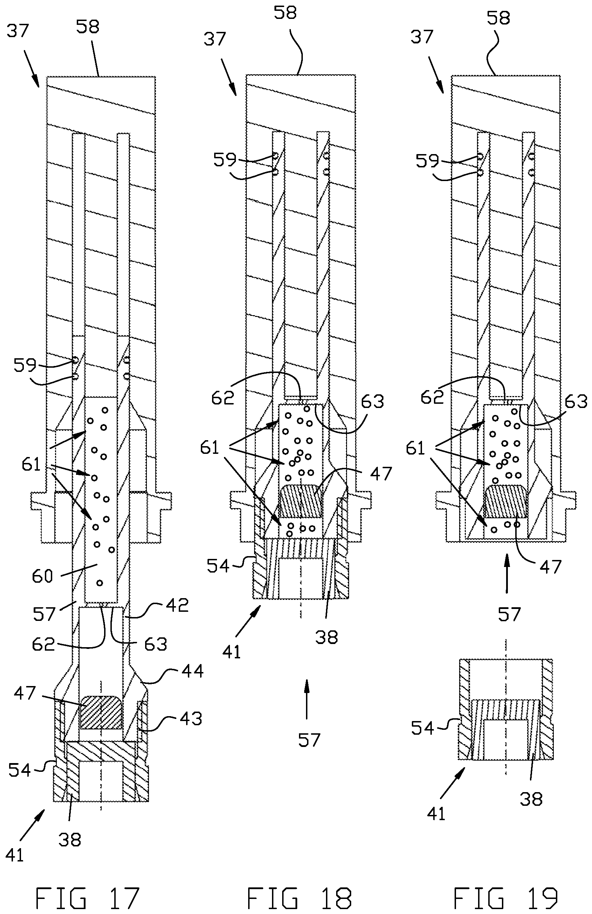

This first capsule section 57 can be telescopically moved in and out of the second capsule section 58, whereby figure 17 shows the first capsule section 57 as fully extended from the second capsule section 58, whereas figures 18 and 19 show the first capsule section 57 as fully retracted in the second capsule section 58.

Both capsule sections 57 and 58 are sealed in relation to each other by means of a pair of sealing rings 59, so that, after the stopper 38 has been put in the first capsule section 57, the whole is hermetically sealed. Thus, the two-piece capsule 37 can also assume its container function for the storage and packaging of biopsy tissue 47.

The aim is that the capsule 37 is initially placed in its extended position on the female tag part 8, so that there is enough space to apply the marking pliers round the bush 19 on the female tag part 8.

In the extended position of the two-piece capsule 37, there is a chamber 60 between the first capsule section 57 and the second capsule section 58, which is preferably filled with a preservative 61, for example in the shape of a gas, a liquid, a powder or a granulate.

By inserting the first capsule section 57 in the second capsule section 58, the preservative 61 is pressed out of the chamber 60 through a little hole 62 provided to that end in the bottom 63 of the first capsule section 57.

Thus, after the biopsy has been taken, the biopsy tissue 47 contained in the first capsule section 57 sealed by the stopper 38 will be held in an environment in which a preservative 61 has been introduced under pressure, which situation is represented in figure 18.

In the retracted position, the capsule 37 has dimensions which are also compatible to the measuring devices which are usually used in labs, whereas the first capsule section 57 is too narrow to that end.

Figure 19 further illustrates how the knife-shaped sealable capsule tip 41 is preferably mounted in a removable manner on the first capsule section 57, so that in the lab, the whole consisting of the stopper 38 and this removable capsule tip 41 can be easily detached in its entirety from the first capsule section 57 so as to get hold of the biopsy tissue 47 in the capsule 37.

According to a preferred embodiment of an identification kit 2 corresponding to the invention, a removable sticker 64 is provided, with which the capsule 37 can be temporarily protected until a biopsy needs to be taken.

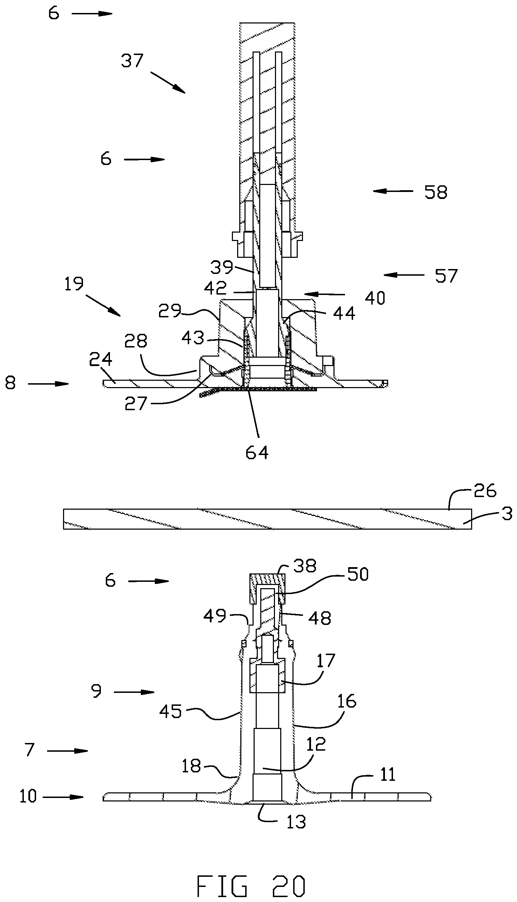

Figure 20 represents one of the many possibilities for applying such a sticker 64, whereby the sticker 64 is in this case stuck in front over the open duct end 23 of the duct 20 in the female tag part 8.

Of course, it is not excluded to apply such a sticker 64 on the capsule tip 41 or to combine both or the like.

The invention is by no means restricted to the embodiments of an identification kit 2 according to the invention, described by way of example and represented in the accompanying drawings; on the contrary, such an identification kit 2 can be achieved in many other ways while still remaining within the scope of the invention.

## Claims

1. Identification kit (2) for identifying a living creature (1), such as an animal or a plant, containing at least the following elements:
- a mark (4) which can be pierced through the organic tissue (26) of the creature (1) and thus can be attached to the creature (1) so as to mark it, consisting of a male tag part (7) and a female tag part (8), with a male elongated projection (9) and a complementary female duct (20) respectively, which can be inextricably connected to one another in the tissue (26) of the creature (1) by piercing it and by inserting the male elongated projection (9) in the female duct (20); and,
- a biopsy kit (6) for taking a biopsy containing a capsule (37) and a stopper (38), making it possible, by joining the male and female tag part (7,8), to insert a biopsy (47) of the tissue (26) of the creature (1) in the capsule, to put the stopper (38) in a fitting manner in the capsule (37) and to separate the sealed biopsy kit (6) from the mark (4);
whereby the female tag part (8) is provided with a perforation (36) opening in the female duct (20) and which stretches in the extension thereof and whereby the head (14) of the male elongated projection (9) has a shape which is complementary to the perforation (36), such that after the male tag part (7) and the female tag part (8) have been joined and connected, the perforation (36) is sealed tightly by the head (14) of the longitudinal protrusion (9), and whereby the capsule (37) is formed of a separate part which can be inserted in the female duct (20) and whereby, by joining the male tag part (7) and the female tag part (8), the capsule (37) can be pushed through the perforation (36), **characterised in that** the capsule (37) is provided with a part having a sleeve wall (39) which extends between a sealed capsule tip (40) and a sealable capsule tip (41), whereby the sleeve wall (39) has a narrowed wall part (42) near the sealed capsule tip (40) and a widened wall part (43) near the sealable capsule tip (41), which wall parts (42,43) are connected by means of an intermediary wall part (44), whereby the narrowed wall part (42) has an outer diameter (E) corresponding to the inner diameter (E') of the perforation (36) in the female tag part (7) and the widened wall part (43) has an outer diameter (F) corresponding to the inner diameter (F') of the duct (20) in the female tag part (8).

2. Identification kit (2) according to claim 1, **characterised in that** the capsule (37), at its sealable capsule tip (41), is provided with a sharp edge which serves as a knife when taking a biopsy.

3. Identification kit (2) according to one or several of the preceding claims, **characterised in that** the female tag part (8) is provided with one or several locking springs (27) protruding over a restricted length from the duct wall (22) of the female duct (20) so as to hold the male and the female tag part (7,8) inextricably together after they have been joined.

4. Identification kit (2) according to claims 1 and 3, **characterised in that** the capsule (37) is formed of a separate part (37) provided with at least one groove (54) which can co-operate with one or several locking springs (27) protruding over a length corresponding to the depth of the groove (54) from the duct wall (22) of the female duct (20) so as to lock the capsule (37) in the duct (20) before a biopsy is taken.

5. Identification kit (2) according to one or several of the preceding claims, **characterised in that** the female duct (20) is provided with a bottom (21) in which the perforation (36) has been made and a duct wall (22) which extends as of the bottom (21) up to an open duct end (23), whereby the duct wall (22), over a substantial part of its length (L) extending as of the open duct end (23), is designed as a cylindrical wall part (22) with an almost constant inner diameter (F') for a fluid shape.

6. Identification kit (2) according to claim 5, **characterised in that** the head (14) of the male protrusion (9) is surrounded by a bumper (49) with which the male protrusion (9) can rest on the bottom (21) of the female duct (20) when the male tag part (7) has been provided in the female tag part (8).

7. Identification kit (2) according to claim 5, **characterised in that** the male protrusion (7) is provided with a cylindrical part (45) with an almost constant outer diameter (F") for a fluid shape corresponding to the almost constant inner diameter (F') of the cylindrical part (22) of the female duct (20) so as to form a slender pivot (45).

8. Identification kit (2) according to one or several of the preceding claims, **characterised in that** the head (14) of the male protrusion (9) is provided with a cylindrical far end (50) on which the stopper (38) of the biopsy kit (6) can be placed.

9. Identification kit (2) according to claim 8, **characterised in that** the stopper (38) of the biopsy kit (6) is provided with a cylindrical stop wall (51) and a stop bottom (52), whereby the cylindrical stop wall (51) has an inner diameter (G) or outer diameter (I) corresponding to the outer diameter (G') or inner diameter (I') respectively of a cylindrical part (50) provided on the head (14) of the male protrusion (9), such that the stopper (38) can be placed on the head (14).

10. Identification kit (2) according to claim 9, **characterised in that** the cylindrical stop wall (51) has an outer diameter (H') corresponding to the inner diameter (H) of an inner cylindrical hole (53) in the capsule (37) at the sealable capsule tip (41).

11. Identification kit (2) according to one or several of the preceding claims, **characterised in that** the male longitudinal protrusion (9) contains a plastic portion (18) designed as a pivot (45), in which a pin (17) is incorporated made of a more rigid material, and whereby on the pin (17) is provided a plastic head (14) which is complementary to the perforation (36) in the female tag part (8) and to the stopper (38) of the biopsy kit (6).

12. Identification kit (2) according to claim 11, **characterised in that** the head (14) of the longitudinal protrusion (9) forms a separate part which can be put as separate on the pin (17).

13. Identification kit (2) according to one or several of the preceding claims, **characterised in that** it is provided with a removable sticker (64) with which the capsule (37) can be temporarily protected until a biopsy is to be taken.

## Patentansprüche

1. Identifikationsset (2) zum Identifizieren eines Lebewesens (1), wie etwa eines Tieres oder einer Pflanze, welches mindestens die folgenden Elemente enthält:
- eine Markierung (4), die durch das organische Gewebe (26) des Lebewesens (1) gestochen werden kann und somit an dem Lebewesen (1) befestigt werden kann, um es zu markieren, bestehend aus einem männlichen Markierungsteil (7) und einem weiblichen Markierungsteil (8), mit einem männlichen länglichen Vorsprung (9) beziehungsweise einem komplementären weiblichen Kanal (20), welche in dem Gewebe (26) des Lebewesens (1) unlösbar miteinander verbunden werden können, indem dieses durchstochen wird und indem der männliche längliche Vorsprung (9) in den weiblichen Kanal (20) eingebracht wird; und
- ein Biopsieset (6) zum Nehmen einer Biopsie, welches eine Kapsel (37) und einen Stopfen (38) enthält, das es ermöglicht, durch Zusammenfügen des männlichen und des weiblichen Markierungsteils (7, 8) ein Bioptat (47) des Gewebes (26) des Lebewesens (1) in die Kapsel einzubringen, den Stopfen (38) passend in die Kapsel (37) einzubringen und den verschlossenen Biopsieset (6) von der Markierung (4) zu trennen;
wobei der weibliche Markierungsteil (8) mit einer Perforation (36) versehen ist, die in dem weiblichen Kanal (20) mündet und die sich in dessen Verlängerung erstreckt, und wobei der Kopf (14) des männlichen länglichen Vorsprungs (9) eine Form aufweist, die komplementär zu der Perforation (36) ist, sodass nach dem Zusammenfügen und Verbinden des männlichen Markierungsteils (7) und des weiblichen Markierungsteils (8) die Perforation (36) durch den Kopf (14) des länglichen Vorsprungs (9) dicht verschlossen ist, und wobei die Kapsel (37) durch einen separaten Teil gebildet wird, der in den weiblichen Kanal (20) eingebracht werden kann, und wobei die Kapsel (37), durch das Zusammenfügen des männlichen Markierungsteils (7) und des weiblichen Markierungsteils (8), durch die Perforation (36) hindurch gedrückt werden kann, **dadurch gekennzeichnet, dass** die Kapsel (37) mit einem Teil mit einer Hülsenwand (39) versehen ist, die sich zwischen einem verschlossenen Kapselende (40) und einem verschließbaren Kapselende (41) erstreckt, wobei die Hülsenwand (39) in Nähe des verschlossenen Kapselendes (40) einen verengten Wandteil (42) und in Nähe des verschließbaren Kapselendes (41) einen verbreiterten Wandteil (43) aufweist, welche Wandteile (42, 43) mittels eines dazwischenliegenden Wandteils (44) miteinander verbunden sind, wobei der verengte Wandteil (42) einen Außendurchmesser (E) aufweist, der dem Innendurchmesser (E`) der Perforation (36) in dem weiblichen Markierungsteil (7) entspricht, und der verbreiterte Wandteil (43) einen Außendurchmesser (F) aufweist, der dem Innendurchmesser (F') des Kanals (20) in dem weiblichen Markierungsteil (8) entspricht.

2. Identifikationsset (2) nach Anspruch 1, **dadurch gekennzeichnet, dass** die Kapsel (37) an ihrem verschließbaren Kapselende (41) mit einer scharfen Kante versehen ist, die beim Nehmen einer Biopsie als Messer dient.

3. Identifikationsset (2) nach einem oder mehreren der vorhergehenden Ansprüche, **dadurch gekennzeichnet, dass** der weibliche Markierungsteil (8) mit einer oder mehreren Verschlussfedern (27) versehen ist, die über eine begrenzte Länge aus der Kanalwand (22) des weiblichen Kanals (20) ragen, um das männliche und das weibliche Markierungsteil (7, 8) nach deren Zusammenfügen unlösbar zusammenzuhalten.

4. Identifikationsset (2) nach den Ansprüchen 1 und 3, **dadurch gekennzeichnet, dass** die Kapsel (37) durch einen separaten Teil (37) gebildet wird, der mit mindestens einer Nut (54) versehen ist, die mit einer oder mehreren Verschlussfedern (27) zusammenwirken kann, welche über eine Länge, welche der Tiefe der Nut (54) entspricht, aus der Kanalwand (22) des weiblichen Kanals (20) ragen, um die Kapsel (37) in dem Kanal (20) zu verriegeln, bevor eine Biopsie genommen wird.

5. Identifikationsset (2) nach einem oder mehreren der vorhergehenden Ansprüche, **dadurch gekennzeichnet, dass** der weibliche Kanal (20) mit einem Boden (21), worin die Perforation (36) angebracht ist, und einer Kanalwand (22), die sich von dem Boden (21) bis zu einem offenen Kanalende (23) erstreckt, versehen ist, wobei die Kanalwand (22) über einen wesentlichen Teil ihrer Länge (L), der sich ab dem offenen Kanalende (23) erstreckt, als zylindrischer Wandteil (22) mit einem nahezu konstanten Innendurchmesser (F') für eine fließende Form ausgeführt ist.

6. Identifikationsset (2) nach Anspruch 5, **dadurch gekennzeichnet, dass** der Kopf (14) des männlichen Vorsprungs (9) durch einen Stoßrand (49) umgeben ist, womit der männliche Vorsprung (9) auf dem Boden (21) des weiblichen Kanals (20) aufliegen kann, wenn der männliche Markierungsteil (7) in dem weiblichen Markierungsteil (8) angebracht ist.

7. Identifikationsset (2) nach Anspruch 5, **dadurch gekennzeichnet, dass** der männliche Vorsprung (7) mit einem zylindrischen Teil (45) mit einem nahezu konstanten Außendurchmesser (F") für eine fließende Form versehen ist, die dem nahezu konstanten Innendurchmesser (F') des zylindrischen Teils (22) des weiblichen Kanals (20) entspricht, um einen schlanken Drehpunkt (45) zu bilden.

8. Identifikationsset (2) nach einem oder mehreren der vorhergehenden Ansprüche, **dadurch gekennzeichnet, dass** der Kopf (14) des männlichen Vorsprungs (9) mit einem zylindrischen Ende (50) versehen ist, worauf der Stopfen (38) des Biopsiesets (6) angebracht werden kann.

9. Identifikationsset (2) nach Anspruch 8, **dadurch gekennzeichnet, dass** der Stopfen (38) des Biopsiesets (6) mit einer zylindrischen Stopfenwand (51) und einem Stopfenboden (52) versehen ist, wobei die zylindrische Stopfenwand (51) einen Innendurchmesser (G) oder Außendurchmesser (I) aufweist, der dem Außendurchmesser (G') beziehungsweise dem Innendurchmesser (I') eines an dem Kopf (14) des männlichen Vorsprungs (9) angebrachten zylindrischen Teils (50) entspricht, sodass der Stopfen (38) auf dem Kopf (14) angebracht werden kann.

10. Identifikationsset (2) nach Anspruch 9, **dadurch gekennzeichnet, dass** die zylindrische Stopfenwand (51) einen Außendurchmesser (H`) aufweist, der dem Innendurchmesser (H) eines inneren zylindrischen Lochs (53) in der Kapsel (37) an dem verschließbaren Kapselende (41) entspricht.

11. Identifikationsset (2) nach einem oder mehreren der vorhergehenden Ansprüche, **dadurch gekennzeichnet, dass** der männliche längliche Vorsprung (9) einen als Drehpunkt (45) ausgeführten Kunststoffteil (18) umfasst, worin ein Stift (17) eingearbeitet ist, der aus einem starreren Material hergestellt ist, und wobei auf dem Stift (17) ein Kunststoffkopf (14) vorgesehen ist, der komplementär zu der Perforation (36) in dem weiblichen Markierungsteil (8) und zu dem Stopfen (38) des Biopsiesets (6) ist.

12. Identifikationsset (2) nach Anspruch 11, **dadurch gekennzeichnet, dass** der Kopf (14) des länglichen Vorsprungs (9) einen separaten Teil bildet, der separat auf dem Stift (17) angeordnet werden kann.

13. Identifikationsset (2) nach einem oder mehreren der vorhergehenden Ansprüche, **dadurch gekennzeichnet, dass** es mit einem abnehmbaren Aufkleber (64) versehen ist, womit die Kapsel (37) zeitweilig geschützt werden kann, bis eine Biopsie zu nehmen ist.

## Revendications

1. Nécessaire d'identification (2) pour identifier une créature vivante (1), telle qu'un animal ou une plante, contenant au moins les éléments suivantes :
- une marque (4) qui peut être percée à travers le tissu organique (26) de la créature (1) et qui peut par conséquent être fixée à la créature (1) de façon à la marquer, constituée par une partie mâle (7) en forme d'étiquette et une partie femelle (8) en forme d'étiquette, comprenant une saillie allongée mâle (9) et un conduit femelle complémentaire (20), respectivement, qui peuvent être fixés l'un à l'autre de manière indissociable dans le tissu (26) de la créature (1) en le transperçant et en insérant la saillie allongée mâle (9) dans le conduit femelle (20) ; et
- un nécessaire de biopsie (6) pour procéder à une biopsie, contenant une capsule (37) et un bouchon (38), qui permet, en joignant la partie mâle et la partie femelle en forme d'étiquette (7, 8), d'insérer un prélèvement de biopsie (47) du tissu (26) de la créature (1) dans la capsule, de placer le bouchon (38) par insertion dans la capsule (37) et de séparer le nécessaire de biopsie scellé (6) par rapport à la marque (4) ;
dans lequel la partie femelle (8) en forme d'étiquette est munie d'une perforation (36) s'ouvrant dans le conduit femelle (20) et qui s'étend sur l'étendue de ce dernier, et dans lequel la tête (14) de la saillie allongée mâle (9) possède une configuration qui est complémentaire à celle de la perforation (36), d'une manière telle qu'après la jonction et la liaison de la partie mâle (7) en forme d'étiquette et de la partie femelle (8) en forme d'étiquette, la perforation (36) est serrée de manière hermétique par la tête (14) de la saillie longitudinale, et dans lequel la capsule (37) est réalisée sous la forme d'un élément séparé qui peut être inséré dans le conduit femelle (20), et dans lequel, en joignant la partie mâle (7) en forme d'étiquette et la partie femelle (8) en forme d'étiquette, la capsule (37) peut être poussée à travers la perforation (36), **caractérisé en ce que** la capsule (37) est munie d'une partie possédant une paroi de manchon (39) qui s'étend entre une extrémité de capsule scellée (40) et une extrémité de capsule (41) qui peut être scellée, dans lequel la paroi de manchon (39) possède une partie de paroi rétrécie (42) à proximité de l'extrémité de capsule scellée (40) et une partie de paroi élargie (43) à proximité de l'extrémité de capsule (41) qui peut être scellée, lesdites parties de paroi (42, 43) étant reliées au moyen d'une partie de paroi intermédiaire (44), la partie de paroi rétrécie (42) possédant un diamètre externe (E) correspondant au diamètre interne (E') de la perforation (36) dans la partie femelle (7) en forme d'étiquette et la partie de paroi élargie (43) possédant un diamètre externe (F) correspondant au diamètre interne (F') du conduit (20) dans la partie femelle (8) en forme d'étiquette.

2. Nécessaire d'identification (2) selon la revendication 1, **caractérisé en ce que** la capsule (37), à son extrémité de capsule (41) qui peut être scellée, est munie d'une arête vive qui fait office de lame lorsqu'on réalise une biopsie.

3. Nécessaire d'identification (2) selon une ou plusieurs des revendications précédentes, **caractérisé en ce que** la partie femelle (8) en forme d'étiquette est munie d'un ou de plusieurs ressorts de verrouillage (27) faisant saillie sur une longueur restreinte à partir de la paroi de conduit (22) du conduit de femelle (20), de façon à maintenir la partie mâle et la partie femelle en forme d'étiquette (7, 8) à l'état indissociablement lié après leur jonction.

4. Nécessaire d'identification (2) selon les revendications 1 à 3, **caractérisé en ce que** la capsule (37) est réalisée sous la forme d'un élément séparé (37) muni d'au moins une rainure (54) qui peut coopérer avec un ou plusieurs ressorts de verrouillage (27) faisant saillie sur une longueur correspondant à la profondeur de la rainure (54) à partir de la paroi de conduit (22) du conduit de femelle (20), de façon à verrouiller la capsule (37) dans le conduit (20) avant de réaliser une biopsie.

5. Nécessaire d'identification (2) selon une ou plusieurs des revendications précédentes, **caractérisé en ce que** le conduit femelle (20) est muni d'une base (21) dans laquelle la perforation (36) a été réalisée et d'une paroi de conduit (22) qui s'étend à partir de la base (21) jusqu'à une extrémité ouverte (23) du conduit, la paroi de conduit (22), sur une partie substantielle de sa longueur (L) qui s'étend à partir de l'extrémité ouverte (23) du conduit, étant conçue sous la forme d'une partie de paroi cylindrique (22) possédant un diamètre interne (F') pratiquement constant pour une configuration de fluide.

6. Nécessaire d'identification (2) selon la revendication 5, **caractérisé en ce que** la tête (14) de la saillie mâle (9) est entourée d'une butée (49) contre laquelle la saillie mâle (9) peut s'appuyer sur la base (21) du conduit femelle (20) lorsque la partie mâle (7) en forme d'étiquette a été insérée dans la partie femelle (8) en forme d'étiquette.

7. Nécessaire d'identification (2) selon la revendication 5, **caractérisé en ce que** la saillie mâle (7) est munie d'une partie cylindrique (45) possédant un diamètre externe (F") pratiquement constant pour une configuration de fluide, correspondant au diamètre interne (F') pratiquement constant de la partie cylindrique (22) du conduit femelle (20) de façon à obtenir un pivot allongé (45).

8. Nécessaire d'identification (2) selon une ou plusieurs des revendications précédentes, **caractérisé en ce que** la tête (14) de la saillie mâle (9) est munie d'une extrémité éloignée cylindrique (50) sur laquelle le bouchon (38) du nécessaire de biopsie (6) peut venir se placer.

9. Nécessaire d'identification (2) selon la revendication 8, **caractérisé en ce que** le bouchon (38) du nécessaire de biopsie (6) est muni d'une paroi d'arrêt cylindrique (51) et d'une base d'arrêt (52), la paroi d'arrêt cylindrique (51) possédant un diamètre interne (G) ou un diamètre externe (I) correspondant au diamètre externe (G') ou au diamètre interne (I'), respectivement, d'une partie cylindrique (50) prévue sur la tête (14) de la saillie mâle (9) d'une manière telle que le bouchon (38) peut venir se placer sur la tête (14).

10. Nécessaire d'identification (2) selon la revendication 9, **caractérisé en ce que** la paroi d'arrêt cylindrique (51) possède un diamètre externe (H') correspondant au diamètre interne (H) d'un trou interne cylindrique (53) dans la capsule (37) à l'extrémité de capsule (41) qui peut être scellée.

11. Nécessaire d'identification (2) selon une ou plusieurs des revendications précédentes, **caractérisé en ce que** la saillie longitudinale mâle (9) contient une portion (18) en matière plastique conçue pour faire office de pivot (45), dans laquelle est incorporée une broche (17) constituée d'une matière plus rigide, et dans lequel, sur la broche (17), est prévue une tête (14) en matière plastique qui est complémentaire à la perforation (36) dans la partie femelle (8) en forme d'étiquette et au bouchon (38) du nécessaire de biopsie (6).

12. Nécessaire d'identification (2) selon la revendication 11, **caractérisé en ce que** la tête (14) de la saillie longitudinale (9) forme un élément séparé qui peut être placé sous la forme d'une pièce détachée sur la broche (17).

13. Nécessaire d'identification (2) selon une ou plusieurs des revendications précédentes, **caractérisé en ce qu'**il est muni d'un autocollant amovible (64) avec lequel la capsule (37) peut être protégée de manière temporaire jusqu'à ce que l'on doive procéder à une biopsie.
